# NEUE EUROPÄISCHE PATENTSCHRIFT

(11) **EP 0 722 820 B2**
(45) Veröffentlichungstag und Bekanntmachung des Hinweises auf die Entscheidung über den Einspruch: **24.06.2009**
(45) Hinweis auf die Patenterteilung: 08.08.2001
(21) Anmeldenummer: 95119019.8
(22) Anmeldetag: 02.12.1995
(51) Int. Cl.: B29C 45/64, B29C 45/17, B22D 17/26

(54) **Holmlose Formschliesseinrichtung**
Tie bar-less mould clamping device
Dispositif de fermeture de moule sans colonnes

(30) Priorität: 19.01.1995 DE 19501469
(43) Veröffentlichungstag der Anmeldung: 24.07.1996
(73) Patentinhaber: Billion S.A.S., 01100 Bellignat (FR)
(72) Erfinder: Füller, Klaus, Dipl.-Ing., D-19061 Schwerin (DE); Hopp, Christian, Dipl.-Ing., D-19063 Consrade (DE)
(74) Vertreter: Jacoby, Georg

(56) Entgegenhaltungen:
- EP-A- 0 311 133
- EP-A- 0 554 068
- WO-A-94/17977
- WO-A1-96/11785
- DE-A- 4 302 639
- DE-B- 2 048 258
- DE-C- 4 420 639
- DE-U- 9 212 480

## Beschreibung

Die Erfindung betrifft eine holmlose Formschließeinrichtung für Maschinen zur Kunststoffverarbeitung, z. B. Spritzgießmaschinen, bestehend aus einem c-förmigen Maschinenrahmen, an dessen beiden Schenkeln Werkzeugaufspannplatten angeordnet sind, von denen eine fest und die andere mittels einer Verstelleinrichtung längsbewegbar ist. Die feste und die bewegbare Werkzeugaufspannplatte besitzen Montageflächen zur Aufnahme der Formhälften eines Formwerkzeuges. Die Schließ- und Aufreißkraft, die während des Einspritz- und Aufreißvorganges durch den Linearantrieb erzeugt wird, wird dabei vom Maschinenrahmen aufgenommen.

Im EP 0311133 A1 und im DE-GM 9212480 werden gattungsgemäße Lösungen beschrieben, die den Vorteil haben, daß durch den c-förmigen Maschinenrahmen der Werkzeugraum zwischen der festen und der bewegbaren Werkzeugaufspannplatte frei zugängig ist. Dadurch wird der Werkzeugwechsel gegenüber Formschließeinrichtungen, bei denen die Übertragung der Schließkraft durch Holme erfolgt, die die beiden Werkzeugaufspannplatten miteinanander verbinden, wesentlich vereinfacht. Außerdem können größere Formwerkzeuge durch eine bessere Ausnutzung der Werkzeugaufspannfläche auf Spritzgießmaschinen mit kleinerer Schließkraft eingesetzt werden, wodurch die Kosten günstig beeinflußt werden. Um bei holmlosen Spritzgießmaschinen eine absolute Parallelität der beiden Formhälften trotz der Verformung des Maschinenrahmens durch die sehr hohen Formauftreibkräfte zu erreichen, wurde im EP 0311133 A1 bereits vorgeschlagen, daß eine der beiden Werkzeugaufspannplatten um eine horizontale Achse kippbar gelagert ist. Im DE-GM 9212480 wird ferner vorgeschlagen, daß die feststehende Formaufspannplatte direkt um eine horizontale Achse kippbar am Maschinenrahmen gelagert ist und die bewegbare Formaufspannplatte um eine im Abstand zu ihr befindliche horizontale Achse schwenkbar ist. Damit ein Abheben der bewegbaren Werkzeugaufspannplatte vom Maschinenrahmen verhindert wird, besitzt die bewegbare Werkzeugaufspannplatte einen Gleitschuh, der formschlüssig mit einer Führungsschiene verbunden ist. Die Führungsschiene ist entweder einseitig an der festen Werkzeugaufspannplatte oder am Maschinenrahmen gelagert. Zur Gewährleistung einer Relativbewegung zwischen der bewegbaren Werkzeugaufspannplatte und der Führungsschiene sind Federn zwischen dem Gleitschuh und der bewegbaren Werkzeugaufspannplatte angeordnet oder die Führungsschiene ist mittels Federn am Maschinenrahmen befestigt. Ferner ist aus der DEPS 2048258 eine gattungsähnliche Formschließeinrichtung zur Herstellung von Kunststoffbehältern im Blasformverfahren bekannt, bei der beide Werkzeugaufspannplatten gegeneinander bzw. voneinander weg bewegbar sind. Die beiden Werkzeugaufspannplatten sind dabei in den Schenkeln des c-förmigen Maschinenrahmens einachsig gelenkig gelagert und werden durch entsprechende Führungseinrichtungen geführt. Der Nachteil aller bisher bekannten Lösungen besteht darin, daß für die einachsige Lagerung der festen Werkzeugaufspannplatte und/oder der bewegbaren Werkzeugaufspannplatte/n bzw. der festen Werkzeugaufspannplatte und der Endplatte im Maschinenrahmen sehr große kostenintensive Lager erforderlich sind. Des weiteren kann die Parallelität der Werkzeugaufspannplatten zueinander nur durch entsprechende Führungen gewährleistet werden. Durch die einachsig gelenkige Lagerung der Endplatte bzw. der festen und der bewegbaren Werkzeugaufspannplatte/n treten Kippbelastungen auf, die außerdem einen starken Verschleiß der Führungen für die Formwerkzeuge und der Führungen für die bewegbare/n Werkzeugaufspannplatte zur Folge haben.

Aufgabe der Erfindung ist es daher, eine kostengünstigere Lösung zu finden, durch die die Parallelität der Formhälften infolge der Verformung des Maschinenrahmens durch die hohen Formauftreibkräfte erhalten bleibt.

Erfindungsgemäß wird die Aufgabe nach den Merkmalen des Oberbegriffes von Anspruch 1 dadurch gelöst, daß mindestens ein Schenkel des Maschinenrahmens eine derartige Querschnittsschwächung aufweist, daß durch die auftretenden Schließkräfte bzw. Zuhaltekräfte eine gewollte elastische Verformung des Schenkels derart eintritt, daß keine Winkelabweichung der Montagefläche für die Formhälften des Formwerkzeuges aus ihrer vorzugsweise senkrechten Arbeitsstellung erfolgt. Gemäß der Erfindung können der Schenkel für die feste Werkzeugaufspannplatte und der Schenkel für die Endplatte eine entsprechende Querschnittsschwächung aufweisen. Ebenso ist es aber auch möglich, daß nur der Schenkel für die feste Werkzeugaufspannplatte oder nur der Schenkel für die Endplatte die Querschnittsschwächung besitzt. Bei holmlosen Formschließeinrichtungen zur Herstellung von Hohlkörpern auf Blasformmaschinen, sind im Gegensatz zu Spritzgießmaschinen zwei bewegbare Werkzeugaufspannplatten vorhanden, die aufeinander zu bzw. voneinander fortbewegbar sind. In diesem Falle können vorzugsweise auch beide Schenkel des Maschinenrahmens oder jeweils nur ein Schenkel, an denen die beiden bewegbaren Werkzeugaufspannplatten befestigt sind, eine entsprechende Querschnittsschwächung besitzen. In der weiteren Ausgestaltung der Erfindung ist vorgesehen, daß die Querschnittsschwächungen in den Schenkeln des Maschinenrahmens vorzugsweise als Schlitze ausgebildet sind und die feste Werkzeugaufspannplatte und die Endplatte bzw. beide bewegbaren Werkzeugaufspannplatten innenseitig an vorzugsweise senkrechten Anlageflächen der Schenkel vom Maschinenrahmen befestigt sind. Die Schlitze sind so gestaltet und angeordnet, daß sich durch deren Deformierung bei der Schließkrafterzeugung und durch die gleichzeitig auftretende elastische Verformung des Maschinenrahmens die vorzugsweise senkrechte Lage der Anlageflächen nicht bzw. unwesentlich verändert.

Weiterhin verlaufen die Schlitze in den Schenkeln vorzugsweise horizontal, sind unterhalb der Einspritzebene angeordnet, enden in mindestens einem Rundbogen und besitzen in Richtung zum Formwerkzeug eine Öffnung. Die Schlitze in den Schenkeln können aber auch oberhalb und unterhalb der Einspritzebene angeordnet sein und in mindestens zwei Rundbögen enden.

Der Vorteil dieser Lösung besteht darin, daß keine konstruktiv bzw. technologisch aufwendigen Lageranordnungen für die Aufnahme der festen Werkzeugaufspannplatte und der Zylinderplatte bzw. der bewegbaren Werkzeugaufspannplatten am Maschinenrahmen erforderlich sind. Durch eine einfache lösbare Schraubverbindung können die feste Werkzeugaufspannplatte bzw. die Endplatte oder die bewegbaren Werkzeugaufspannplatten am Maschinenrahmen schnell montierbar und auswechselbar befestigt werden. In Abhängigkeit von den technischen und technologischen Erfordernissen z. B. im Spritzgießbetrieb (Düsenzugang und Zugang zu den Hydraulikleitungen des Linearantriebes), kann die Lage und Gestaltung des Schlitzes in den Schenkeln des c-förmigen Maschinenrahmens variiert werden. Der wesentliche Vorteil der Erfindung besteht jedoch darin, daß bei der Einwirkung der Schließ-bzw. Aufreißkraft durch die Anordnung der Schlitze ein Teil jedes Schenkels in die Lage versetzt wird, eine Biegeverformung so auszuführen, daß sich der Neigungswinkel der Anlagefläche für die feste Werkzeugaufspannplatte bzw. die Endplatte gegenüber der Einspritzebene nicht oder nur unwesentlich verändert.

Bei einer weiteren Ausführungsform der Erfindung ist vorgesehen, sofern nur ein Schenkel des Maschinenrahmens eine Querschnittsschwächung besitzt, daß die im jeweils anderen Schenkel angeordnete Werkzeugaufspannplatte oder Endplatte in mindestens zwei horizontalen rechtwinklig zur Längsmittelachse verlaufenden Lagerachsen am Maschinenrahmen über elastisch verformbare Elemente befestigt ist. Die Lagerachsen befinden sich oberhalb und unterhalb der Einspritzebene. Die Anordnung und Befestigung der elastisch verformbaren Elemente geschieht so, daß durch die auftretende Schließkraft bzw. Zuhaltekraft eine gewollte elastische Verformung der elastisch verformbaren Elemente derart erfolgt, daß keine Winkelabweichung der Montageflächen für die Werkzeugaufspannplatten eintritt. Gemäß dieser Ausführungsform der Erfindung ergeben sich unterschiedliche Kombinationsmöglichkeiten. So kann einmal der Schenkel, an dem die Endplatte befestigt ist, einen Schlitz besitzen und die feste Werkzeugaufspannplatte in zwei horizontalen Lagerachsen im Maschinenrahmen aufgenommen werden, die oberhalb und unterhalb der Einspritzebene und rechtwinklig zur Längsmittelachse der Formschließeinrichtung angeordnet sind. In diesem Falle sind mindestens zwei elastisch verformbare Elemente zwischen der Montagefläche von der festen Werkzeugaufspannplatte und der unterhalb der Einspritzebene befindlichen Lagerachse angeordnet. Die andere Kombination besteht darin, daß der Schenkel, an dem die feste Werkzeugaufspannplatte befestigt ist, einen Schlitz besitzt und die Endplatte in mindestens zwei horizontalen Lagerachsen im Maschinenrahmen aufgenommen wird. Die Lagerachsen befinden sich ebenfalls oberhalb und unterhalb der Einspritzebene und sind rechtwinklig zur Längsmittelachse der Formschließeinrichtung angeordnet. Jeweils mindestens zwei elastisch verformbare Elemente sind zwischen der Montagefläche von der bewegbaren Werkzeugaufspannplatte und der unterhalb der Einspritzebene angeordneten Lagerachse von der Endplatte vorgesehen.

Die elastisch verformbaren Elemente sind bei jeder Kombination so angeordnet, daß bei der Erzeugung der Schließ- und Aufreißkraft durch die auftretende elastische Verformung des Maschinenrahmens gleichzeitig eine elastische Stauchung der verformbaren Elemente erfolgt, so daß die senkrechte Lage der Aufspannfläche von der festen Werkzeugaufspannplatte bzw. die senkrechte Lage der Aufspannfläche von der bewegbaren Werkzeugaufspannplatte erhalten bleibt. Durch die zuletzt beschriebene kombinierte Anordnung, bei der die Parallelität der Formhälften vom Formwerkzeug einmal durch gezielte elastische Verformung der Schenkel des Maschinenrahmens und zum anderen durch elastische Elemente zwischen dem Maschinenrahmen und der festen Werkzeugaufspannplatte oder der Endplatte erreicht wird, werden unterschiedliche Vorteile erzielt. So wird mit der Abstützung durch elastisch verformbare Elemente der Zugang zum Düsenbereich hinter der festen Werkzeugaufspannplatte oder der Zugang zu den Hydraulikverschraubungen am Schließzylinder im Bereich der Endplatte verbessert. Ein weiterer Vorteil besteht darin, daß die elastisch verformbaren Elemente z. B. als fertigungstechnisch einfach herstellbare Rundstäbe ausgebildet sein können. Dadurch können mit geringem Aufwand fertigungsbedingte Parallelitätsabweichungen zwischen den Werkzeugaufspannplatten durch Korrektur der Länge bzw. des Durchmessers der Rundstäbe beseitigt werden.

Die Erfindung soll nachstehend in einem Ausführungsbeispiel erläutert werden. In den zugehörigen Zeichnungen ist dargestellt
- Fig. 1: holmlose Formschließeinrichtung in der Vorderansicht in Öffnungsstellung,
- Fig. 2: eine andere Ausführungsform einer holmlosen Formschließeinrichtung,
- Fig. 3: eine weitere Ausführungsform einer holmlosen Formschließeinrichtung in der Vorderansicht,
- Fig. 4: ein Teilschnitt gemäß der Linie A-A in Figur 3,
- Fig. 5: holmlose Formschließeinrichtung gemäß Figur 1 in der Schließstellung und
- Fig. 6: eine größere Draufsicht auf eine holmlose Formschließeinrichtung gemäß Figur 3

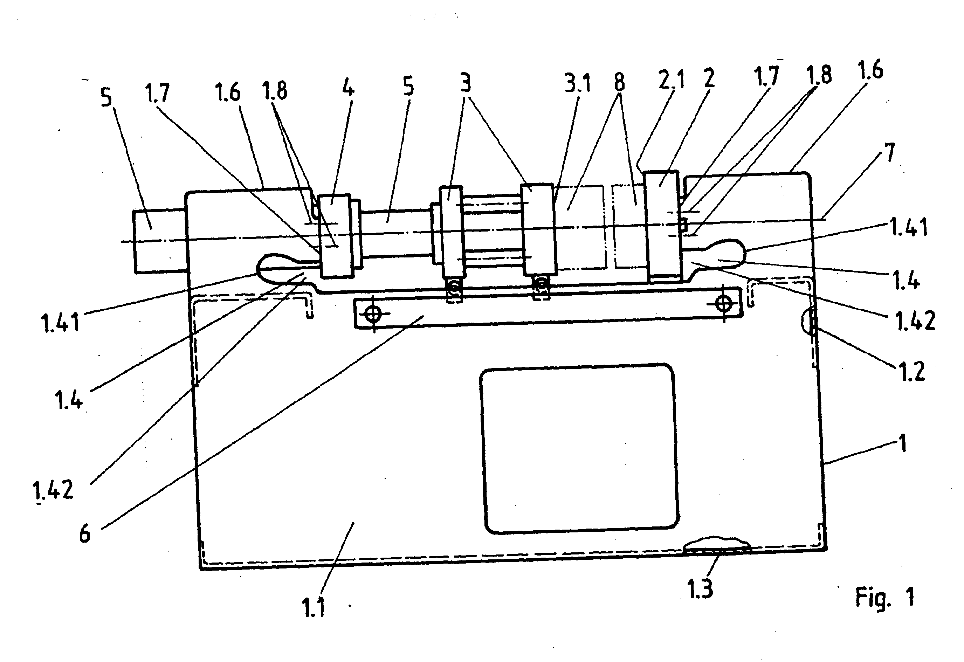

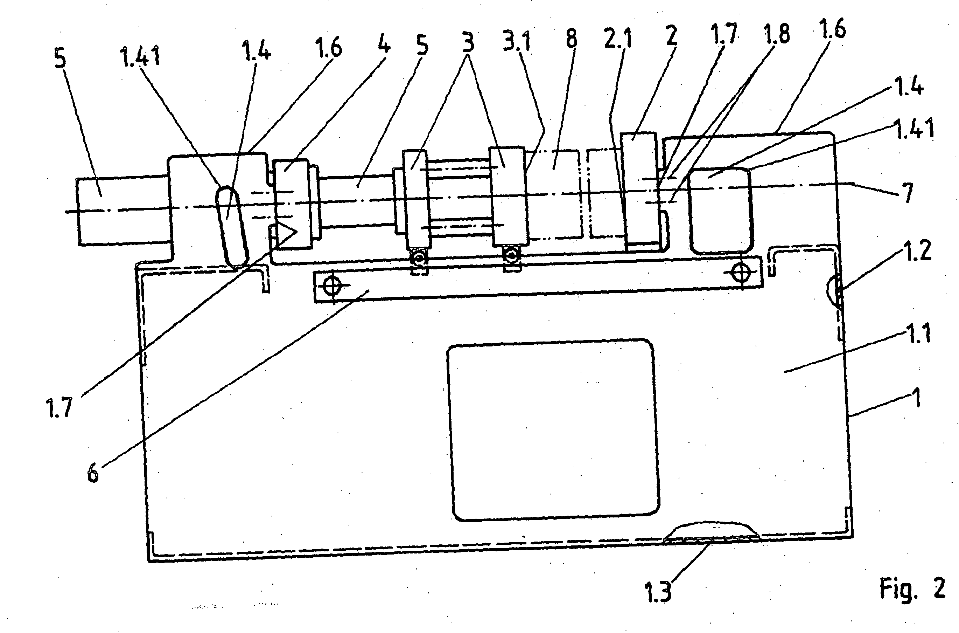

In Figur 1 ist eine holmlose Formschließeinrichtung für eine Spritzgießmaschine zur Kunststoffverarbeitung ohne Einspritzaggregat dargestellt. Die Formschließeinrichtung besteht aus einem c-förmigen Maschinenrahmen 1, an dessen einem Schenkel 1.6 innenseitig die feste Werkzeugaufspannplatte 2 und an dessen anderem Schenkel 1.6 innenseitig die Endplatte 4 angeordnet sind. Im Ausführungsbeispiel wird der c-förmige Maschinenrahmen 1 von zwei Seitenwänden 1.1 gebildet, die durch Abstandshalter 1.2 und einen Boden 1.3 untereinander verbunden sind. Zwischen der festen Werkzeugaufspannplatte 2 und der Endplatte 4 ist auf Führungsschienen 6 die bewegbare Werkzeugaufspannplatte 3 mit Hilfe der Verstelleinrichtung verschiebbar. Die Verstelleinrichtung ist als Linearantrieb 5 ausgebildet, der im Ausführungsbeispiel aus einem hydraulischen Arbeitszylinder besteht, der in der Endplatte 4 und der bewegbaren Werkzeugaufspannplatte 3 gelagert ist. Durch eine nicht dargestellte elektro-hydraulische Steuerung wird mit Hilfe des hydraulischen Arbeitszylinders die notwendige Schließ- und Aufreißkraft für das Schließen und Öffnen der Formhälften des Formwerkzeuges 8 erzeugt. Die Schließ- und Aufreißkräfte werden dabei ausschließlich vom c-förmigen Maschinenrahmen 1 aufgenommen. Zur Aufnahme der jeweiligen Formhälfte des Formwerkzeuges 8 besitzen die feste und die bewegbare Werkzeugaufspannplatte 2 bzw. 3 entsprechende Montageflächen 2.1 bzw. 3.1. Aus der Figur 1 ist ersichtlich, daß innenseitig in den beiden Schenkeln 1.6 vom c-förmigen Maschinenrahmen 1 Schlitze 1.4 eingearbeitet sind. Die Schlitze 1.4 befinden sich vorzugsweise unterhalb der Einspritzebene 7, sind einseitig offen und enden auf der anderen Seite in einem Rundbogen 1.41. Im Ausführungsbeispiel verlaufen die Schlitze 1.4 annähernd horizontal und besitzen innenseitig in Richtung zu den Werkzeugaufspannplatten 2 und 3 eine Öffnung 1.42. In Figur 2 sind andere und zwar geschlossene Formen der Schlitze 1.4 dargestellt, die senkrecht bzw. schräge verlaufen, unterschiedlich breit ausgeführt sind und an den Enden stark abgerundet sind bzw. in Rundbogen 1.41 auslaufen. Wie aus Figur 1 und Figur 2 ersichtlich ist, werden die feste Werkzeugaufspannplatte 2 und die Endplatte 4 innenseitig an senkrechten Anlageflächen 1.7 der Schenkel 1.6 des c-förmigen Maschinenrahmens 1 befestigt. Die Befestigung erfolgt durch lösbare Schraubverbindungen 1.8, die in der Figur 1 und 2 nur durch Mittellinien angedeutet sind, so daß eine schnelle und einfache Montage und Demontage gewährleistet ist. Die Lage und Größe des Schlitzes 1.4 in den Schenkeln 1.6 vom Maschinenrahmen 1 kann mit folgenden Einschränkungen beliebig gestaltet und angeordnet werden. Durch entsprechende konstruktive Auslegung ist dabei zu gewährleisten, daß keine Winkelveränderungen der Anlageflächen 1.7 für die feste Werkzeugaufspannplatte 2 und die Endplatte 4 gegenüber der Bewegungsrichtung des Linearantriebes 5 erfolgt.

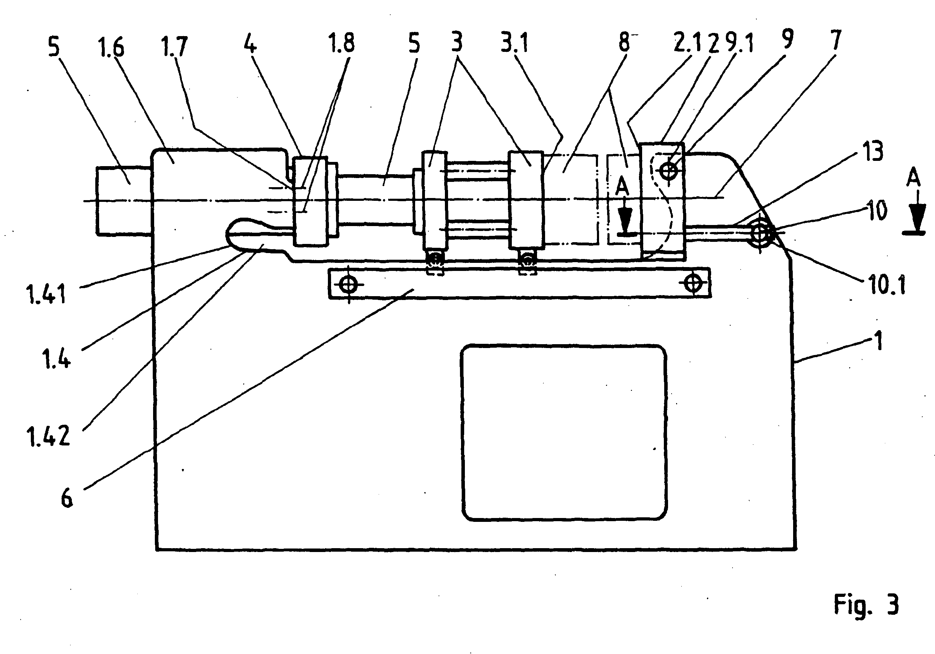

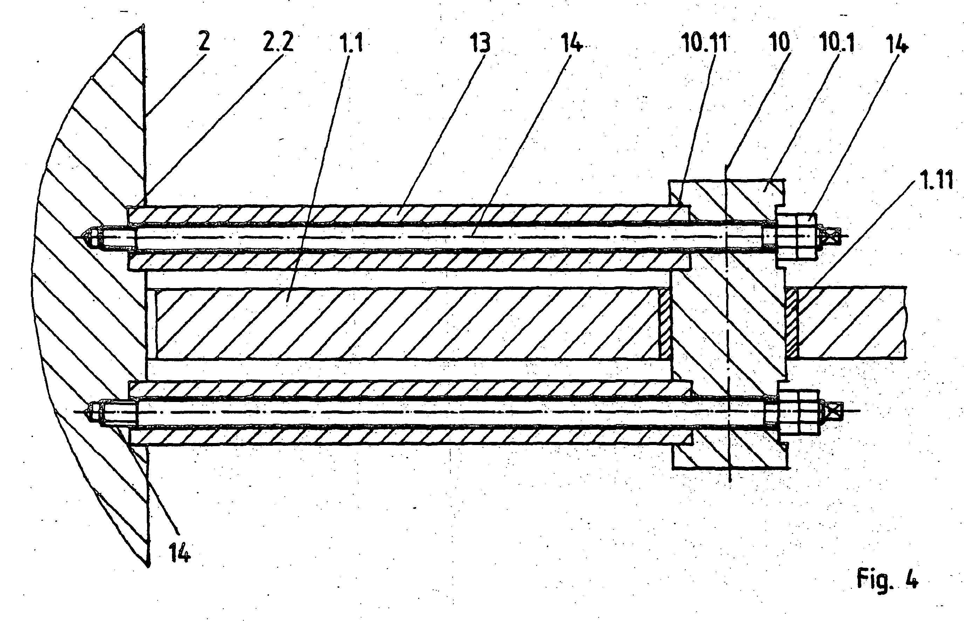

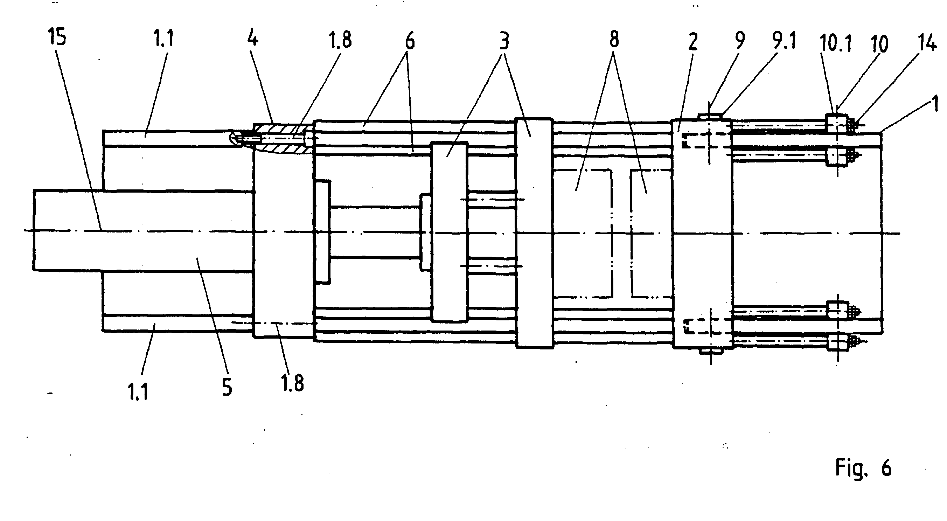

Die Figur 3 zeigt eine weitere Ausführungsform einer holmlosen Formschließeinrichtung, bei der nur in einem Schenkel 1.6 an einer Seite des c-förmigen Maschinenrahmens 1 ein Schlitz 1.4 eingearbeitet ist. Der Schlitz 1.4 befindet sich nur an der Seite, an der die Endplatte 4 befestigt wird, ist zur Endplatte 4 hin offen, verläuft annähernd horizontal und endet in einem großen Rundbogen 1.41. Die Endplatte 4 wird ebenfalls durch eine Schraubverbindung 1.8 innenseitig an der Anlagefläche 1.7 vom Schenkel 1.6 befestigt. Die feste Werkzeugaufspannplatte 2 hingegen wird in zwei horizontalen Lagerachsen 9 und 10 im Maschinenrahmen 1 gelagert. In der älteren Patentanmeldung P 4420639.9 ist diese Lagerung bereits genauer beschrieben. Die eine Lagerachse 9 befindet sich oberhalb und die andere Lagerachse 10 unterhalb der Einspritzebene 7. Die Lagerachsen 9 und 10 sind parallel zu der Montagefläche 2.1 der Formschließeinrichtung angeordnet und haben vorzugsweise unterschiedliche Abstände zur Montagefläche 2.1 der festen Werkzeugaufspannplatte 2. Dabei ist der untere Abstand zur Montagefläche 2.1 größer als der obere Abstand. In einem vergrößerten Teilschnitt ist in Figur 4 ein Teil der unteren Lagerebene mit der Lagerachse 10 für die feste Werkzeugaufspannplatte 2 gemäß der Linie A-A in Figur 3 dargestellt. Die Lagerachse 10 besteht aus einem Bolzen 10.1, der in einer Lagerbuchse 1.11, die in der Seitenwand 1.1 vom Maschinenrahmen 1 angeordnet ist, aufgenommen wird. Beidseitig von jeder Seitenwand 1.1 befinden sich Druckstäbe 13, die als hohlzylindrischer Körper ausgebildet sind. Die Druckstäbe 13 werden in Aussenkungen 2.2 an der festen Werkzeugaufspannplatte 2 und in Aussenkungen 10.11 am Bolzen 10.1 zentriert und abgestützt. Durch eine Schraubverbindung 14 sind die hohlzylindrischen Druckstäbe 13 zwischen der festen Werkzeugaufspannplatte 2 und dem Bolzen 10.1 lösbar befestigt. Die in Figur 3 dargestellte obere Lagerachse 9 für die feste Werkzeugaufspannplatte 2 besteht aus einem Bolzen 9.1, der in einer nicht näher dargestellten Lagerbuchse in der Seitenwand 1.1 vom Maschinenrahmen 1 aufgenommen wird. Die Aufnahme und Befestigung der Druckstäbe 13 kann aber auch auf andere Art und Weise erfolgen. So können die Druckstäbe 13 an einem Ende ein Lagerauge besitzen, das auf einen Lagerbolzen aufsteckbar ist, während das andere Ende mit der festen Werkzeugaufspannplatte 1 verschraubbar ist. Die doppelachsige Lagerung der festen Werkzeugaufspannplatte 2 im Maschinenrahmen 1 hat den Vorteil, daß dadurch der Zugang zur nichtdargestellten Spritzdüse besser gewährleistet werden kann. Andererseits wirkt sich die einfache lösbare Befestigung der Endplatte 4 an der Innenseite des Schenkels 1.6 vom Maschinenrahmen 1 und die Beibehaltung der Parallelität der Formhälften 8 durch die gesteuerte Verformung des Schenkels 1.6 günstiger auf die Herstellungskosten aus. Ebenso ist aber auch die umgekehrte Kombination möglich, die nicht dargestellt ist. In diesem Fall ist die Endplatte 4 doppelachsig im Maschinenrahmen 1 gelagert. Die gewünschte Parallelität der Formhälften 8 zueinander wird einmal durch die verformbaren Druckstäbe 13 erreicht und außerdem durch gesteuerte Verformung der Schenkel 1.6 vom Maschinenrahmen 1, an denen die feste Werkzeugaufspannplatte 2 befestigt ist. Zum besseren Verständnis der Zeichnungen wurde in Figur 6 noch eine holmlose Formschließeinrichtung gemäß Figur 3 in einer Draufsicht vergrößert dargestellt. Im rechten Bildabschnitt sind die Lagerachsen 9 und 10 mit den Lagerbolzen 9.1 und 10.1 zur Aufnahme der festen Werkzeugaufspannplatte 2 im Maschinenrahmen 1 und die seitlich am Maschinenrahmen 1 angeordneten Druckstäbe 13 erkennbar. In der linken Bildseite ist die Befestigung der Endplatte 4 am Maschinenrahmen 1 durch eine Schraubverbindung 1.8 dargestellt.

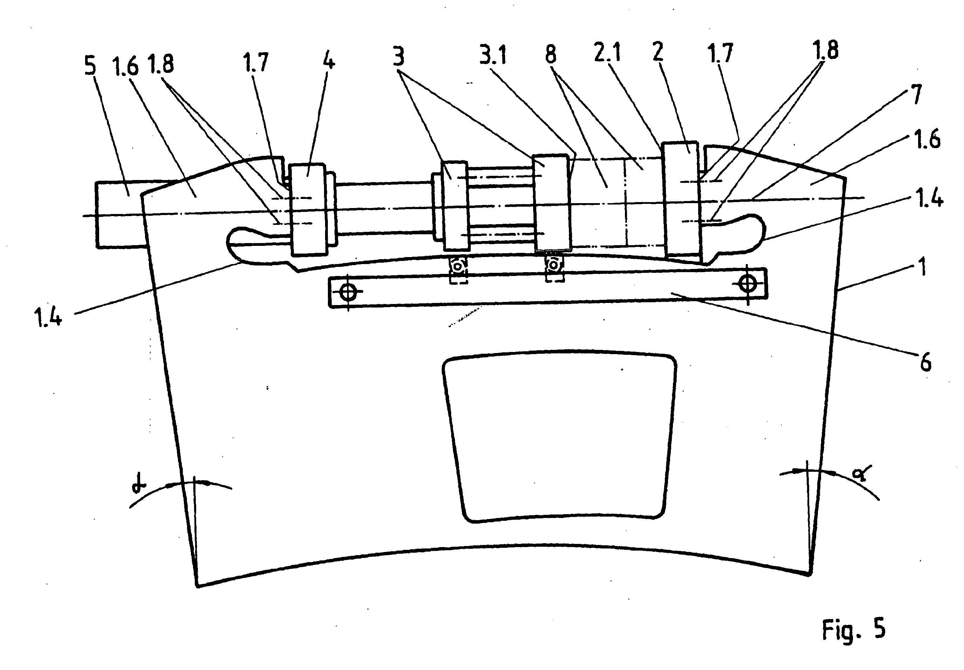

In Figur 5 ist eine Formschließeinrichtung gemäß Figur 1 jedoch in der Schließstellung im Verformungszustand dargestellt. In der gezeigten Schließstellung wird beim Aufbau der Schließkraft durch den Linearantrieb 5 der Maschinenrahmen 1, wie hier stark übertrieben dargestellt ist, um den Winkel α verformt. Die daraus resultierende Aufweitung der Schenkel liegt normal im Millimeterbereich. Bei einer nichterfindungsgemäßen Ausbildung des Maschinenrahmens 1 würde sich jedoch automatisch eine Neigung der festen Werkzeugaufspannplatte 2 und der Endplatte 4 um den gleichen Winkelbetrag α ergeben, wie sich der Maschinenrahmen 1 verformt. Dadurch käme es zu einer Öffnung des Formwerkzeuges 8, zu einem ungewollten Masseaustritt und/oder eine Zerstörung der internen Werkzeugführungen könnte eintreten. Durch die definierte gegenläufige elastische Verformbarkeit der Schenkel 1.6 im Bereich oberhalb des Schlitzes 1.4 des c-förmigen Maschinenrahmens 1 wird jedoch im Bereich der Anlageflächen 1.7 für die Endplatte 4 und für die feste Werkzeugaufspannplatte 2 die Neigung des Maschinenrahmens 1 nicht übertragen. Für die Dauer dieser elastischen Verformung verändert der Schlitz 1.4 seine Geometrie.

Die erfindungsgemäße holmlose Formschließeinrichtung ist in entsprechender Weise auch auf Druck- und Spritzgießmaschinen für die Metallverarbeitung übertragbar.

## Patentansprüche

1. Holmlose Formschließeinrichtung für Maschinen zur Kunststoffverarbeitung z. B. Spritzgießmaschinen bestehend aus einem c-förmigen Maschinenrahmen, an dessen beiden Schenkeln Werkzeugaufspannplatten angeordnet sind, von denen mindestens eine mittels einer Verstelleinrichtung längsverschiebbar ist, **dadurch gekennzeichnet, daß** mindestens ein Schenkel des Maschinenrahmens eine derartige Querschnittsschwächung aufweist, daß durch die auftretenden Schließkräfte bzw. Zuhaltekräfte eine gewollte elastische Verformung des Schenkels derart eintritt, daß keine Winkelabweichung der Montagefläche für die Formhälften des Formwerkzeuges aus ihrer senkrechten Arbeitsstellung erfolgt.

2. Holmlose Formschließeinrichtung nach Anspruch 1, **dadurch gekennzeichnet, daß** die am nicht mit einer Querschnittsschwächung versehenen Schenkel angeordnete Werkzeugaufspannplatte (2) in mindestens zwei horizontalen rechtwinkelig zur Längsmittelachse verlaufenden Lagerachsen (9, 10) am Maschinenrahmen (1) über elastisch verformbare Elemente derart oberhalb und unterhalb der Einspritzebene (7) befestigt ist, daß durch die auftretende Schließkraft bzw. Zuhaltekraft eine gewollte elastische Verformung der Elemente (13) derart erfolgt, daß aus der senkrechten Lage der Montagefläche (2.1) der Werkzeugaufspannplatte (2, 3) keine Winkelabweichung erfolgt.

3. Holmlose Formschließeinrichtung nach Anspruch 1, **dadurch gekennzeichnet, daß** die Querschnittsschwächungen in beiden Schenkeln (1.6) des Maschinenrahmens (1) aus je einem Schlitz (1.4) bestehen, die feste Werkzeugaufspannplatte (2) und die Endplatte (4) innenseitig an senkrechten Anlageflächen (1.7) der Schenkel (1.6) des Maschinenrahmens (1) befestigt sind und die Schlitze (1.4) so gestaltet und angeordnet sind, daß sich durch deren Deformierung bei der Schließkrafterzeugung und durch die gleichzeitig auftretende elastische Verformung des Maschinenrahmens (1), die senkrechte Lage der Anlageflächen (1.7) nicht bzw. unwesentlich verändert.

4. Holmlose Formschließeinrichtung nach Anspruch 1 und 3, **dadurch gekennzeichnet, daß** der Schlitz (1.4) nur in dem Schenkel (1.6) angeordnet ist, an dem die Endplatte (4), befestigt ist.

5. Holmlose Formschließeinrichtung nach Anspruch 1 und 3 **dadurch gekennzeichnet, daß** der Schlitz (1.4) nur in dem Schenkel (1.6) angeordnet ist, an dem die feste Werkzeugaufspannplatte (2) befestigt ist.

6. Holmlose Formschließeinrichtung nach Anspruch 1, 3, 4 und 5, **dadurch gekennzeichnet, daß** der oder die Schlitze (1.4) in den Schenkeln (1.6) horizontal verlaufend unterhalb der Einspritzebene (7) angeordnet sind, in mindestens einem Rundbogen (1.41) enden und in Richtung zum Formwerkzeug (8) eine Öffnung (1.42) besitzen.

7. Holmlose Formschließeinrichtung nach Anspruch 1, 3, 4 und 5, **dadurch gekennzeichnet, daß** der oder die Schlitze (1.4) in den Schenkeln (1.6) oberhalb und unterhalb der Einspritzebene (7) angeordnet sind und in mindestens zwei Rundbögen (1.41) enden.

8. Holmlose Formschließeinrichtung nach Anspruch 1, 2, 3, 4, 6 oder 7, **dadurch gekennzeichnet, daß** der Schenkel (1.6) an dem die Endplatte (4) befestigt ist, einen Schlitz (1.4) besitzt und die feste Werkzeugaufspannplatte (2) in mindestens zwei horizontalen Lagerachsen (9, 10) im Maschinenrahmen (1) aufgenommen wird, von denen jeweils eine oberhalb und eine unterhalb der Einspritzebene (7) und beide rechtwinklig zur Längsmittelachse (15) der Formschließeinrichtung angeordnet sind und zwischen der Montagefläche (2.1) von der festen Werkzeugaufspannplatte (2) und der unterhalb der Einspritzebene (7) befindlichen Lagerachse (10) mindestens zwei elastisch verformbare Elemente (13) angeordnet sind.

9. Holmlose Formschließeinrichtung nach Anspruch 1, 2, 3, 5, 6 oder 7, **dadurch gekennzeichnet, daß** der Schenkel (1.6) an dem die feste Werkzeugaufspannplatte (2) befestigt ist, einen Schlitz (1.4) besitzt und die Endplatte (4) in mindestens zwei horizontalen Lagerachsen (9, 10) im Maschinenrahmen (1) aufgenommen wird, von denen jeweils eine oberhalb und eine unterhalb der Einspritzebene (7) und beide rechtwinklig zur Längsmittelachse (15) der Formschließeinrichtung angeordnet sind und zwischen der Montagefläche (3.1) von der bewegbaren Werkzeugaufspannplatte (3) und der unterhalb der Einspritzebene (7) angeordneten Lagerachse von der Endplatte (4) jeweils mindestens zwei elastisch verformbare Elemente (13) angeordnet sind.

10. Holmlose Formschließeinrichtung für Blasformmaschinen mit zwei bewegbaren Werkzeugaufspannplatten nach Anspruch 1, 3, 6 oder 7, **dadurch gekennzeichnet, daß** die als Schlitze (1.4) ausgebildeten Querschnittsschwächungen in beiden Schenkeln (1.6) des Maschinenrahmens (1) angeordnet sind.

11. Holmlose Formschließeinrichtung nach Anspruch 1 bis 10, **dadurch gekennzeichnet, daß** an jeder Seitenwand (1.1) des Maschinenrahmens (1) Führungsschienen (6) angeordnet sind und an der Unterseite der bewegbaren Werkzeugaufspannplatte (3) Rollen so gelagert sind, daß sie sich auf den Führungsschienen (6)abstützen und auf ihnen abrollbar sind.

12. Holmlose Formschließeinrichtung nach Anspruch 1 bis 11, **dadurch gekennzeichnet, daß** die elastisch verformbaren Elemente aus paarweise angeordneten Druckstäben (13) bestehen, die an ihrem einen Ende mit der Endplatte (4) bzw. der festen Werkzeugaufspannplatte (2) lösbar verbunden sind und am jeweils anderen Ende mit der unterhalb der Spritzachse (7) angeordneten Lagerachse (10) im Maschinenrahmen (1) in Verbindung stehen.

13. Holmlose Formschließeinrichtung nach Anspruch 1 bis 11, **dadurch gekennzeichnet, daß** die elastisch verformbaren Elemente aus Stützarmen bestehen, die im mittleren Bereich durch Ausnehmungen oder Ausfräsungen im Querschnitt geschwächt sind, wobei die Stützarme Bestandteil der Endplatte (4) oder der festen Werkzeugaufspannplatte (2) sind.

14. Holmlose Formschließeinrichtung nach einem der Ansprüche 1 bis 13, **dadurch gekennzeichnet, daß** die Anlageflächen (1.7) für die feste Werkzeugaufspannplatte (2) und die Endplatte (4) bei senkrechter Anordnung der Formschließeinrichtung waagerecht angeordnet sind.

## Claims

1. A tie bar-less mould clamping device for plastics processing machines e.g. injection moulding machines, comprising a C-shaped machine frame, and on whose two limbs tool clamping plates are arranged, at least one of which is longitudinally displaceable by means of an adjustment device, **characterised in that** at least one limb of the machine frame has such a cross-sectional weakening that a desired elastic deformation of the limb results through the clamping or retaining forces, in such a way that no angular deviation of the assembly surface for the mould halves of the moulding tool takes place out of its perpendicular working position.

2. A tie bar-less mould clamping device as according to claim 1, **characterised in that** the tool clamping plate (2) arranged on the limb not provided with a cross-sectional weakening, is secured in at least two bearing axes (9,10) extending horizontally rectangularly to the longitudinal central axis via elastic deformable elements in such a way above and below the injection plane (7), that a desired elastic deformation of the elements (13) results through the clamping or retaining forces, in such a way that no angular deviation of the assembly surface (2.1) of tool clamping plate (2,3) takes place out of the perpendicular position.

3. A tie bar-less clamping device according to claim 1, **characterised in that** the cross-sectional weakenings in both limbs (1.6) of machine frame (1) are each comprised of a slot (1.4), the fixed tool clamping plate (2) and end plate (4) are secured inside to the perpendicular bearing surfaces (1.7) of limb (1.6) of machine frame (1), and slots (1.4) are so-constructed and arranged that the perpendicular position of bearing surfaces (1.7) is not, or insignificantly changed by the deformation of which slot, due to the production of clamping force and by the simultaneously appearing elastic deformation of machine frame (1).

4. A tie bar-less mould clamping device according to claims 1 & 3, **characterised in that** slot (1.4) is only arranged in limb (1.6), to which end plate (4) is secured.

5. A tie bar-less mould clamping device according to claims 1 & 3, **characterised in that** slot (1.4) is only arranged in limb (1.6) to which fixed tool clamping plate (2) is secured.

6. A tie bar-less mould clamping device according to claims 1,3,4 & 5, **characterised in that** the slot or slots (1.4) arranged in limbs (1.6), extending horizontally below the injection plane (7), end in at least a circular curve (1.41) and have an opening (1.42) in the direction of moulding tool (8).

7. A tie bar-less mould clamping device according to claims 1,3,4 & 5, **characterised in that** the slot or slots (1.4) in limbs (1.6) are arranged above and below injection plane (7) and end in at least two circular curves (1.41).

8. A tie bar-less mould clamping device according to claims 1,2,3,4,6 or 7, **characterised in that** limb (1.6) to which end plate (4) is secured has a slot (1.4), and the fixed tool clamping plate (2) is accommodated in at least two horizontal bearing axes (9,10) in machine frame (1), each of which are arranged one above and one below the injection plane (7) and both are arranged rectangularly to longitudinal axis (15) of the tie bar-less mould clamping device, and at least two elastic deformable elements (13) are arranged between the assembly surface (2.1) of fixed tool clamping plate (2) and bering axis (10) found below injection plane (7).

9. A tie bar-less mould clamping device according to claims 1,2,3,5,6 or 7, **characterised in that** limb (1.6) to which fixed tool clamping plate (2) is secured, has a slot (1.4) and end plate (4) is accommodated in at least two horizontal bearing axes (9,10) in machine frame (1), each of which are arranged one above and one below injection plane (7) and both are arranged rectangularly to longitudinal axis (15) of the mould clamping device, and respectively at least two elastic deformable elements (13) are arranged between assembly surface (3.1) of moveable tool clamping plate (3) and bearing axis of end plate (4) arranged below the injection plane (7).

10. A tie bar-less mould clamping device for blow moulding machines having two moveable tool clamping plates as according to claims 1,3,6 or 7, **characterised in that** the cross-sectional weakenings constructed as slots (1.4) are arranged in both limbs of machine frame (1).

11. A tie bar-less mould clamping device according to claims 1-10, **characterised in that** guide rails (6) are arranged on each sidewall (1.1) of machine frame (1), and that rollers are so-positioned on the lower side of moveable tool clamping plate (3) that they are supported on guide rails (6) and can be rolled on them.

12. A tie bar-less mould clamping device according to claims 1-11, **characterised in that** the elastic deformable elements are comprised of compression members (13) arranged in pairs, which are releasably connected at one end to end plate (4) or to the fixed tool clamping plate (2) and at the other end,are respectively in contact with bearing axis (10) arranged below the injection axis (7).

13. A tie bar-less mould clamping device according to claims 1-11, **characterised in that** the elastic deformable elements are comprised of supporting arms which are weakened in the central area by recesses or countersinkings, and whereby the supporting arms are components of end plate (4) or of the fixed tool clamping plate (2).

14. A tie bar-less mould clamping device according to claims 1-13, **characterised in that** on perpendicular arrangement of the mould clamping device, bearing surfaces (1.7) for fixed tool clamping plate (2) are arranged horizontally.

## Revendications

1. Dispositif de fermeture de moule sans colonnes pour machines de transformation des plastiques, par exemple pour des presses à injection, composées d'un bâti en forme de C, dont les deux branches portent deux plateaux de fixation du moule, dont au moins l'un peut se déplacer sous l'effet d'un dispositif de translation longitudinale,
**caractérisé en ce qu'**
au moins une branche du bâti de la machine présente une diminution appropriée de sa section engendrant une déformation élastique contrôlée de la branche, sous l'effet de la force de serrage ou de la force de verrouillage, sans que ne se produise aucune variation de l'angle du plan de montage des demi-coquilles du moule à partir de leur position verticale de fonctionnement.

2. Dispositif de fermeture de moule sans colonnes selon la revendication 1,
**caractérisé en ce que**
le plateau de fixation du moule (2) monté sur la branche ne présentant pas de diminution de sa section est monté dans au moins deux axes de paliers horizontaux (9, 10), fixés sur le bâti (1) de la machine, perpendiculaires à l'axe longitudinal médian, par l'intermédiaire d'éléments élastiques déformables respectivement au-dessus et au-dessous du plan d'injection (7), de façon à provoquer, sous l'effet de la force de serrage et de la force de verrouillage, une déformation contrôlée des éléments (13) sans que ne se produise aucune variation d'angle à partir de la position verticale des surfaces de montage (2.1) du plateau de fixation du moule (2, 3).

3. Dispositif de fermeture de moule sans colonnes selon la revendication 1,
**caractérisé en ce que**
la diminution de section dans les deux branches (1.6) du bâti (1) se compose respectivement d'une entaille, le plateau fixe (2) de fixation du moule et le plateau d'extrémité (4) sont montés à l'intérieur sur la face d'appui (1.7) des branches (1.6) du bâti (1), et les entailles (1.4) sont conçues et disposées de telle sorte que leur déformation sous l'effet de la force de serrage et de la déformation élastique simultanée du bâti (1) ne modifient pas sensiblement la position verticale des faces d'appui (1.7).

4. Dispositif de fermeture de moule sans colonnes selon l'une des revendications 1 et 3,
**caractérisé en ce que**
l'entaille (1.4) est ménagée uniquement dans la branche (1.6) sur laquelle est monté le plateau d'extrémité (4).

5. Dispositif de fermeture de moule sans colonnes selon l'une des revendications 1 et 3,
**caractérisé en ce que**
l'entaille (1.4) est ménagée seulement dans la branche (1.6) sur laquelle est monté le plateau fixe (2)de fixation du moule.

6. Dispositif de fermeture de moule sans colonnes selon l'une des revendications 1, 3 et 4,
**caractérisé en ce que**
la ou les entailles (1.4) ménagées dans les branches (1.6) s'étendant horizontalement au-dessous du plan d'injection (7), se terminent en au moins une partie cintrée arrondie (1.41) et présentent une ouverture (1.42) en direction du moule (8).

7. Dispositif de fermeture de moule sans colonnes selon l'une des revendications 1, 3, 4 et 5,
**caractérisé en ce que**
la ou les entailles (1.4) ménagées dans les branches (1.6) sont situées au-dessus et au-dessous du plan d'injection (7), et se terminent en au moins deux parties cintrées arrondies (1.41).

8. Dispositif de fermeture de moule sans colonnes selon l'une des revendications 1, 2, 3, 4, 6 ou 7,
**caractérisé en ce que**
la branche (1.6) sur laquelle est monté le plateau d'extrémité (4) comporte une entaille (1.4) et le plateau fixe (2) de fixation du moule est supporté par au moins deux axes de paliers horizontaux (9, 10) dans le bâti (1) de la machine, dont l'un est situé au-dessus et l'autre au-dessous du plan d'injection (7), les deux étant perpendiculaires à l'axe médian longitudinal (15), et entre la face de montage (2.1) du plateau fixe (2) de fixation du moule et l'axe de palier (10) situé au-dessous du plan d'injection (7), sont disposés au moins deux éléments élastiques déformables (13).

9. Dispositif de fermeture de moule sans colonnes selon l'une des revendications 1, 2, 3, 5, 6 ou 7,
**caractérisé en ce que**
la branche (1.6) sur laquelle est monté le plateau fixe (2) de fixation du moule comporte une entaille (1.4) et le plateau d'extrémité est supporté par au moins deux axes de paliers (9, 10) horizontaux, dans le bâti de la machine (1), dont l'un est situé au-dessus et l'autre au-dessous du plan d'injection (7), les deux étant perpendiculaires à l'axe médian longitudinal (15) du dispositif de fermeture de moule, et entre la face de montage (3.1) du plateau mobile (3) de fixation du moule et l'axe de palier (10) situé au-dessous du plan d'injection (7) du plateau d'extrémité (4), sont disposés au moins deux éléments élastiques déformables (13).

10. Dispositif de fermeture de moule sans colonnes pour machines de soufflage avec deux plateaux mobiles de fixation du moule selon l'une des revendications 1, 3, 6 ou 7,
**caractérisé en ce que**
les diminutions de section en forme d'entailles (1.4) sont ménagées dans les deux branches (1.6) du bâti (1) de la machine.

11. Dispositif de fermeture de moule sans colonnes selon l'une des revendications 1 à 10,
**caractérisé en ce que**
sur chaque paroi latérale (1.1) du bâti (1) sont disposées des rails de guidage (6) et à la partie inférieure du plateau mobile (3) de fixation du moule, des rouleaux prennent appui sur ces rails de guidage (6) où ils peuvent rouler.

12. Dispositif de fermeture de moule sans colonnes selon l'une des revendications 1 à 11,
**caractérisé en ce que**
les éléments élastiques déformables sont constitués par des barres de compression (13) montées par paires, démontables et reliées à l'une de leurs extrémités au plateau d'extrémité (4) et/ou au plateau fixe (2) de fixation du moule, et dont l'autre extrémité respective, est reliée à l'autre axe de palier (10) situé au-dessous de l'axe d'injection (7) dans le bâti (1) de la machine.

13. Dispositif de fermeture de moule sans colonnes selon la revendication 1,
**caractérisé en ce que**
les éléments élastiques déformables consistent en des bras supports qui, dans la zone médiane, sont affaiblis dans leur section par des perçages ou des fraisages, ces bras devenant des constituants du plateau d'extrémité (4) ou du plateau fixe (2) de fixation du moule.

14. Dispositif de fermeture de moule sans colonnes selon l'une des revendications 1 à 13,
**caractérisé en ce que**
les faces d'appui (1.7) du plateau fixe (2) de fixation du moule et du plateau d'extrémité (4) sont disposées horizontalement pour une position verticale du dispositif de fermeture de moule.
